# EUROPEAN PATENT APPLICATION

(11) **EP 4 815 229 A1**
(43) Date of publication of application: **30.09.2026**
(21) Application number: 24846695.5
(22) Date of filing: 21.11.2024
(51) Int. Cl.: H02G 3/06

(54) **ASSEMBLY FOR COUPLING TWO CABLE CHANNELS AND CORRESPONDING COUPLING DEVICE**

(30) Priority: 23.11.2023 ES 202332077 U
(71) Applicant: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.
(86) International application number: PCT/ES2024/070731
(87) International publication number: WO 2025/109243

(57) **Abstract**

The present invention relates to an assembly for coupling two cable channels made of a polymer material, and a coupling device (6) which is part of the assembly. An open end of the cable channels is introduced into a housing (11) on the perimeter of open ends (10) of the coupling device (6), thereby forming a continuous channel. The coupling device (6) comprises a movable pressing body (12) and an actuator (13) that can be manually operated to move the pressing body (12) to a blocking position. The pressing body (12) is a rigid plate made of a polymer material and has at its ends support surfaces in a plane. **In** the blocking position, the support surfaces are flatly supported with pressure on a side wall of the cable channels to block the movement of the open end of the cable channels in the housing (11).

## Description

### Field of the Invention

The invention is comprised in the field of cable channels that are typically used for guiding cables in a space. The invention is applicable particularly, although not exclusively, for guiding bundles of fiber optic cables and other cables in data centers.

More specifically, the invention relates to an assembly for coupling two cable channels, comprising:
- a first cable channel and a second cable channel made of a polymer material, each of them comprising a segment having a U-shaped section, with a bottom wall, two opposing side walls, an open upper face, and at least one open end; and
- a coupling device for coupling said first and second cable channels to one another, said coupling device being in the form of a straight channel in a longitudinal direction, with a U-shaped section, with a bottom wall, two opposing side walls, an open upper face, and two opposing open ends; said coupling device comprising, along the perimeter of each of said open ends, a housing in which said open end of the first and second cable channels is introduced in said longitudinal direction, for coupling them to said coupling device, such that said first and second cable channels and said coupling device form a continuous channel in said longitudinal direction; said coupling device further comprising, in each of its two side walls, a movable pressing body and an actuator that can be manually operated to move said pressing body to a blocking position, in which said pressing body is supported with pressure on one of the side walls of each of the first and second cable channels, at the open end introduced into said housing, thereby blocking the coupling of said first and second cable channels with said coupling device.

The invention also relates to the coupling device which is part of this assembly.

### State of the Art

EP1606866B1 discloses an assembly for coupling two cable channels of the type indicated above. The pressing body of the coupling device is a tongue with barbed ends. The pressing body is supported with pressure on the side wall of the cable channels through the edge of the barbed ends of the tongue. Each of these barbed ends of the tongue forms an acute angle with the side wall of the cable channel, and is oriented such that it does not resist the relative movement of the side wall of the cable channel for coupling same to the coupling device, but blocks its relative movement in the opposite direction, which is necessary to uncouple the cable channel. This blocking is due to the fact that the relative movement of the side wall of the cable channel, in the uncoupling direction, causes the edge of the barbed end of the tongue to latch onto said side wall. This blocking system is effective, but has the drawback that the force exerted by the edge of the barbed end of the tongue can damage the surface of the side wall of the cable channel and leave permanent visible marks on said surface. In practice, cable channels are usually made of a polymer material, the tongue is metal, and the edge of the barbed ends of said tongue has a dentation to better latch onto the surface of the cable channel, whereby the drawback indicated above becomes more prominent.

### Description of the Invention

The purpose of the invention is to provide an assembly for coupling two cable channels of the type indicated above, in which the cable channels are blocked in the coupled position without damaging the surface of the cable channels, and at the same time without reducing blocking effectiveness and complicating the coupling device or increasing its manufacturing cost.

This purpose is achieved by means of an assembly for coupling two cable channels of the type indicated above, characterized in that the pressing body is a rigid plate made of a polymer material having, at one end, a first support surface extending in a plane in at least the longitudinal direction of the coupling device and, at an opposing end, a second support surface extending in a plane in at least said longitudinal direction, such that, in the blocking position, each of the first support surface and second support surface is flatly supported with pressure on the side wall of each of the first and second cable channels, at the open end introduced into each of the housings, thereby creating a friction force on said side wall which blocks the movement of said open end in said housing. This flat support, through the support surfaces, allows the actuator to exert, on the pressing body formed by the rigid plate, a significant force which is transmitted directly by the rigid plate to press on the side wall of the cable channel without causing damage to its surface. The extension of the support surfaces, particularly in the longitudinal direction, provides a large friction force which opposes the uncoupling movement, thereby providing robust blocking. Advantageously, to obtain this robust blocking, it is sufficient to provide a unit consisting of a pressing body and an actuator in each of the side walls of the coupling device, without the need for providing any blocking system in the bottom wall.

Preferably, in the side walls of the coupling device, the housing is a space delimited laterally by the side wall of the coupling device and by the rigid plate constituting the pressing body, said rigid plate being arranged facing said side wall of the coupling device. This configuration simplifies the construction of the coupling device. Furthermore, it allows the rigid plate constituting the pressing body to have larger dimensions, and the first support surface and the second support surface can also have larger dimensions, whereby a more stable support of said rigid plate on the side wall of the cable channel is obtained.

Preferably, the first support surface and the second support surface are discontinuous and are made up of the ridges of protuberances formed on one face of the pressing body. Higher pressure in the areas where these protuberances contact the side wall of the cable channel, and therefore a more secure blocking, are thereby obtained, but without damaging the surface of said side wall since the protuberances are all supported on the same plane. Preferably, the protuberances are oblong ribs. This solution prevents the creation of point-shaped support areas which may damage the surface. More preferably, the oblong ribs extend in a direction orthogonal to the longitudinal direction, thereby providing a maximum friction force against a relative movement in said longitudinal direction. In the preferred embodiments, there are between two and ten oblong ribs on each of the first and second support surfaces.

Preferably, the actuator is a rotary knob which is supported on the pressing body and is rotatably assembled about a shaft extending from the side wall of the coupling device and going through an opening of said pressing body, such that, when said actuator rotates with respect to said shaft, said actuator is moved towards the side wall of said coupling device pushing said pressing body. This configuration requires few parts and is particularly robust.

Preferably, the actuator comprises a cylindrical inner wall coaxial with the shaft and a helical track formed by a flange protruding from said cylindrical inner wall; and said shaft comprises at its end at least one trunnion which is supported on said cylindrical inner wall and on said helical track, such that, when said actuator rotates with respect to said shaft, said trunnion slides along said helical track being supported thereon. In this solution, the mechanism formed by the helical track and the trunnion is located entirely inside the actuator, which allows forming a comfortable grip on the outer surface of the actuator so that the user can rotate the actuator. Preferably, the trunnion travels at most one half of a circumference on the helical track, more preferably at most one quarter of a circumference, with respect to the shaft. The user can thereby rotate the actuator easily with one hand and with a single movement to bring the pressing body to the blocking position.

Preferably, a tab which interferes with the trunnion, when said trunnion slides in said helical track, is formed in the helical track, such that said trunnion overcomes said tab by force when said pressing body reaches the blocking position, and such that said tab keeps said pressing body in said blocking position once said trunnion has overcome it by force. This is a simple, sufficiently robust solution to keep the actuator and the pressing body in the blocking position.

Preferably, the coupling device comprises snap-fitting means, different from the housing, which snap-fit with corresponding snap-fitting means of the first and second cable channels, when the open end of each of the first and second cable channels is introduced into said housing for coupling said first and second cable channels to said coupling device. This configuration makes it easier to perform coupling and blocking: the user can first perform the coupling, snap-fitting, as a result, the two cable channels coupled with the coupling device in a stable relative position, and then perform the blocking by manually operating the actuator. It is important to facilitate the assembly operations that must be performed by the user since the cable channels can have large dimensions, which complicates their handling, and can be located in a space that is hard to access for the user.

Preferably, the snap-fitting means of the coupling device are arranged at an upper end of its side walls, opposite its bottom wall, and the snap-fitting means in the first and second cable channels are arranged at an upper end of its side walls, opposite its bottom wall; and, at least in the bottom wall of the coupling device, the housing is formed by a space delimited between an outer partition and said bottom wall of the coupling device, said outer partition being arranged such that it does not reach the end of said bottom wall of the coupling device in the longitudinal direction. This configuration allows coupling to be performed by first introducing the bottom wall of the cable channel into the housing, with said cable channel slightly inclined, and then rotating the cable channel to introduce the upper end of the side walls into the housing to achieve snap-fitting. This way of performing coupling is easier for the user.

Preferably, the snap-fitting means in the coupling device are two opposing lugs, formed in each of the side walls of the coupling device, extending in the longitudinal direction and having a section that tapers off towards the end thereof; and the corresponding snap-fitting means in the first and second cable channels are a tubular flange at an upper end of each of the side walls of the first and second cable channels, such that each of said lugs is introduced and snap-fitted onto said tubular flange of each of said first and second cable channels. This solution has the advantage of using, to perform snap-fitting, flanges that are typically arranged at the upper end of the side walls of the first and second cable channels and used for other functions, particularly for fixing covers or other elements to the cable channel.

Preferably, the coupling device comprises, at an upper end of each of its side walls, a pin extending in the longitudinal direction and forming at each of the ends thereof one of the lugs. This configuration is particularly robust and allows the user to more easily understand the mode of operation at a glance.

Preferably, the pin comprises a central part separating the lugs, said central part being exposed when the first and second cable channels are coupled to the coupling device, with said lugs being introduced and snap-fitted onto the tubular flange of each of said first and second cable channels. Furthermore, preferably, the assembly comprises a bridge having at its ends claws with a shape complementary to the shape of the central part of the pin, such that said claws removably snap-fit with the central part of the pins and said bridge closes a central segment of the open upper face of the coupling device. This solution allows optionally placing the bridge to confine the cables laid in the cable channels, without altering the geometry of said cable channels.

Preferably, the bridge is formed such that, when snap-fitted through its claws to the central part of the pins, closing a central segment of the open upper face of the coupling device, said bridge does not protrude through said open upper face of the coupling device. This solution has the advantage of the bridge not altering the height of the coupled cable channels.

The invention also comprises the coupling device, which is part of the assembly described above, considered individually. Therefore, the invention comprises a coupling device for coupling a first cable channel and a second cable channel to one another, said first and second cable channels being made of a polymer material and each of them comprising a segment having a U-shaped section, with a bottom wall, two opposing side walls, an open upper face, and at least one open end; said coupling device being in the form of a straight channel in a longitudinal direction, with a U-shaped section, with a bottom wall, two opposing side walls, an open upper face, and two opposing open ends, each of said open ends forming, along its perimeter, a housing for introducing, in said longitudinal direction, said open end of the first and second cable channels, for coupling them to said coupling device, such that said first and second cable channels and said coupling device form a continuous channel in said longitudinal direction; said coupling device comprising, in each of its two side walls, a movable pressing body and an actuator that can be manually operated to move said pressing body to a blocking position, in which said pressing body is supported with pressure on one of the side walls of each of the first and second cable channels, at its open end when it is introduced into said housing, thereby blocking the coupling of said first and second cable channels with said coupling device; characterized in that said pressing body is a rigid plate made of a polymer material having, at one end, a first support surface extending in a plane in at least said longitudinal direction and, at an opposing end, a second support surface extending in a plane in at least said longitudinal direction, so that, in said blocking position, each of said first support surface and second support surface is flatly supported with pressure on the side wall of each of the first and second cable channels, at the open end when it is introduced into each of said housings, thereby creating a friction force on said side wall which blocks the movement of said open end in said housing.

The coupling device according to the invention optionally comprises each of the preferred features described above in reference to the coupling device of the assembly.

The invention also comprises other detailed features shown in the following detailed description of an embodiment of the invention and in the attached figures.

### Brief Description of the Drawings

The advantages and features of the invention are apparent from the following description in which preferred embodiments of the invention are described in a non-limiting manner with respect to the scope of the main claim in reference to the figures.
Figure 1 is a perspective view of two cable channels and a coupling device, in an uncoupled position.
Figures 2 and 3 are, respectively, a front view and a perspective view of the cable channel.
Figures 4, 5, and 6 are perspective views showing the successive steps for coupling the two cable channels with the coupling device.
Figures 7, 8, 9, and 10 are, respectively, a top perspective view, a bottom perspective view, a front view, and a side view of the coupling device.
Figures 11 and 12 are exploded perspective views of the coupling device from two different angles.
Figures 13 and 14 are, respectively, a front view and a partial perspective view of the main body of the coupling device, without the pressing body and the actuator.
Figures 15, 16, and 17 are, respectively, a front perspective view, a rear perspective view, and a top view of the pressing body.
Figures 18, 19, and 20 are, respectively, a front perspective view, a rear perspective view, and a sectioned perspective view of the actuator.
Figure 21 is a partial perspective view showing the coupling body and the two cable channels coupled thereto, with the actuator and the pressing body in a non-blocking position.
Figure 22 is a view similar to Figure 21, with the actuator and the pressing body in the blocking position.
Figure 23 is a partial perspective view showing the coupling body and the two cable channels coupled thereto, with the bridge before being placed and snap-fitted.
Figure 24 is a view similar to Figure 23, with the bridge snap-fitted.

### Detailed Description of Embodiments of the Invention

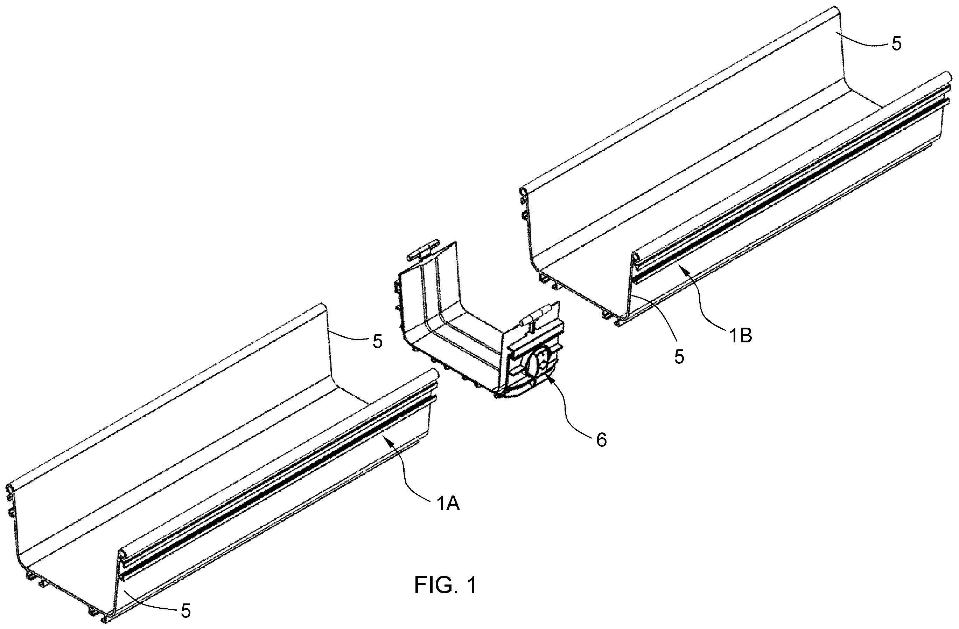

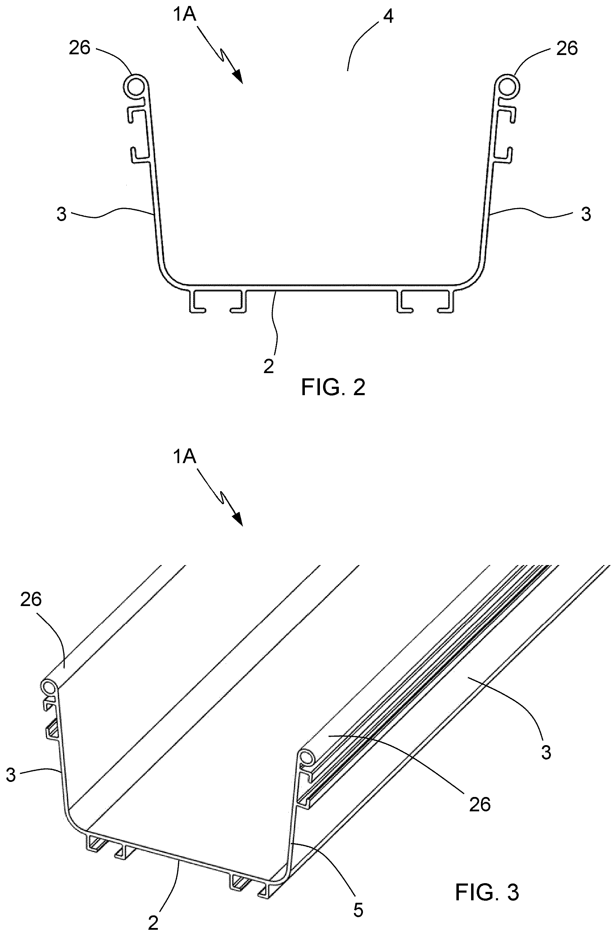

The assembly for coupling two cable channels which is described below by way of example is applied mainly to guide bundles of fiber optic cables in data centers. It is formed by two cable channels 1A, 1B and a coupling device 6. The cable channels 1A, 1B are made of a polymer material such as, for example, PVC (polyvinyl chloride) or ABS (acrylonitrile butadiene styrene). In the example depicted in the figures, the two cable channels 1A, 1B have an identical section and can have different lengths. As can be seen in Figures 1 to 3, each cable channel 1A, 1B is a straight profile segment with a U-shaped section, with a bottom wall 2, two opposing side walls 3, an open upper face 4, and two open ends 5. The free upper end of each side wall 3 forms an outwardly protruding tubular flange 26. Other embodiments of the invention in which the cable channels 1A, 1B are not a straight, U-shaped profile segment are also possible. For example, at least one of the cable channels can be an elbow or a T-shaped branch, with a final segment with a U-shaped section described above.

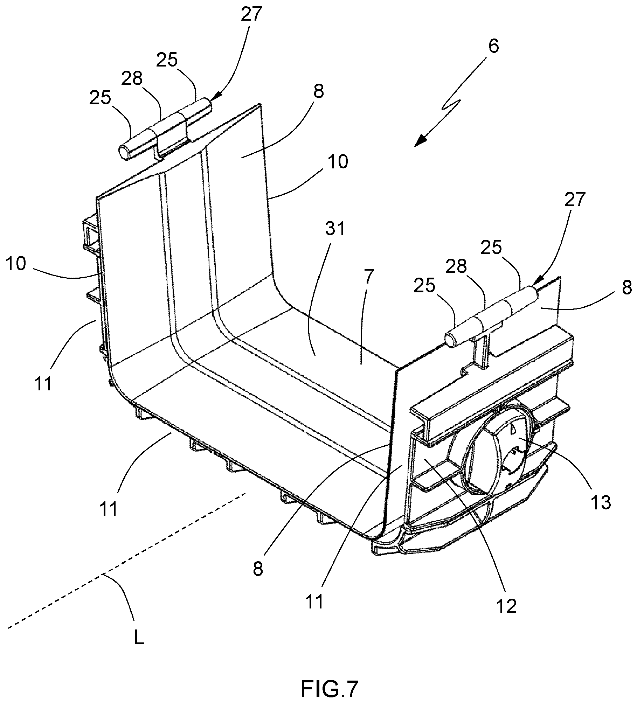

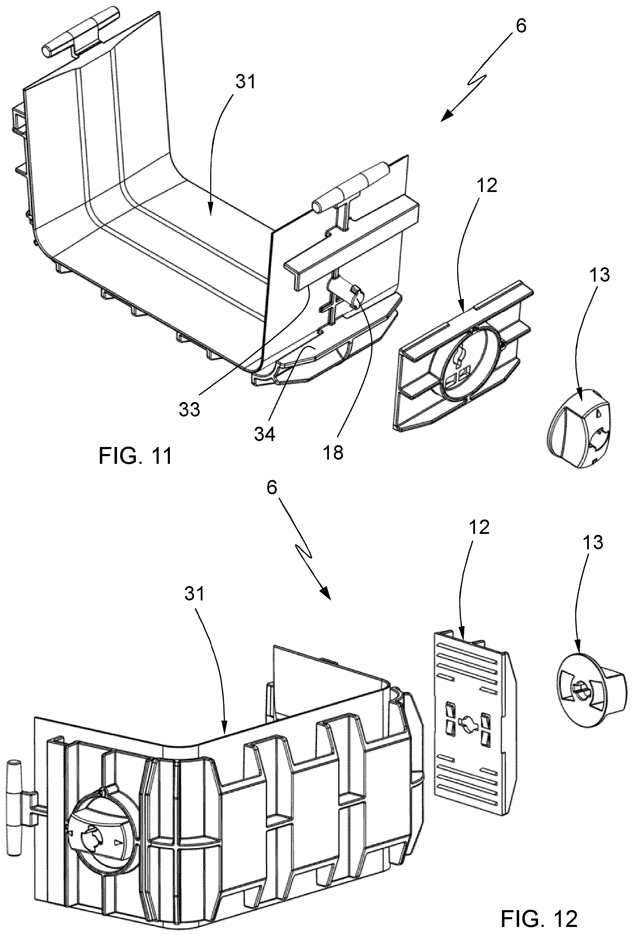

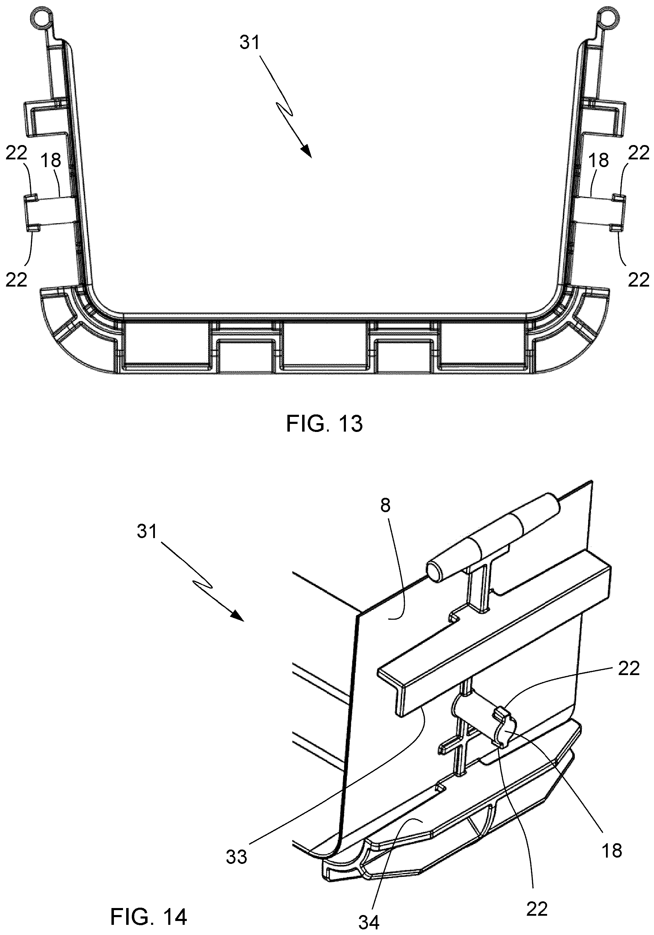

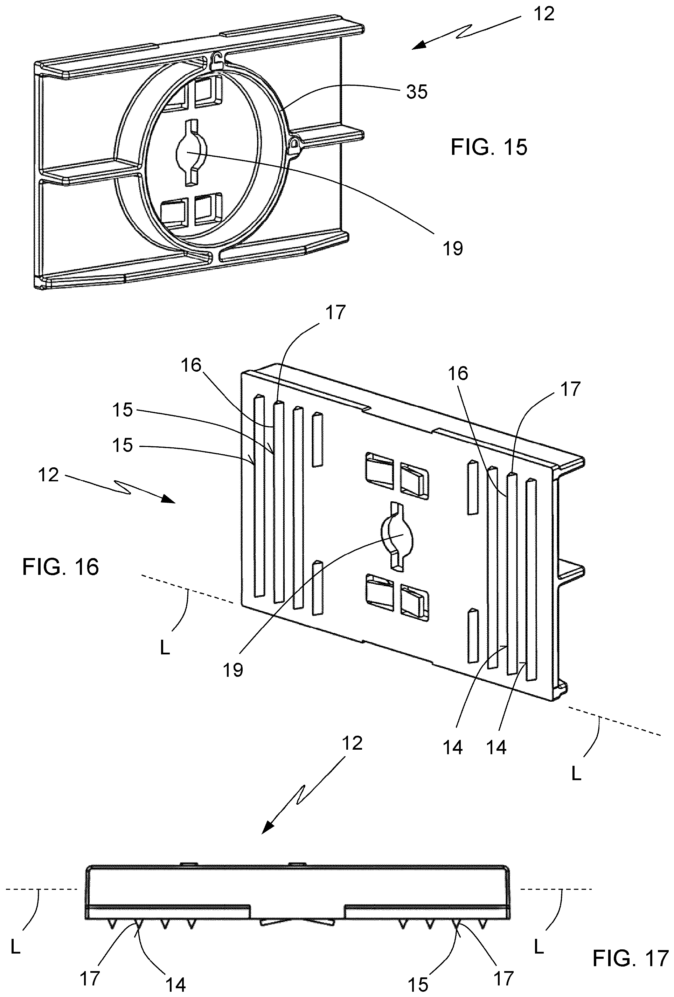

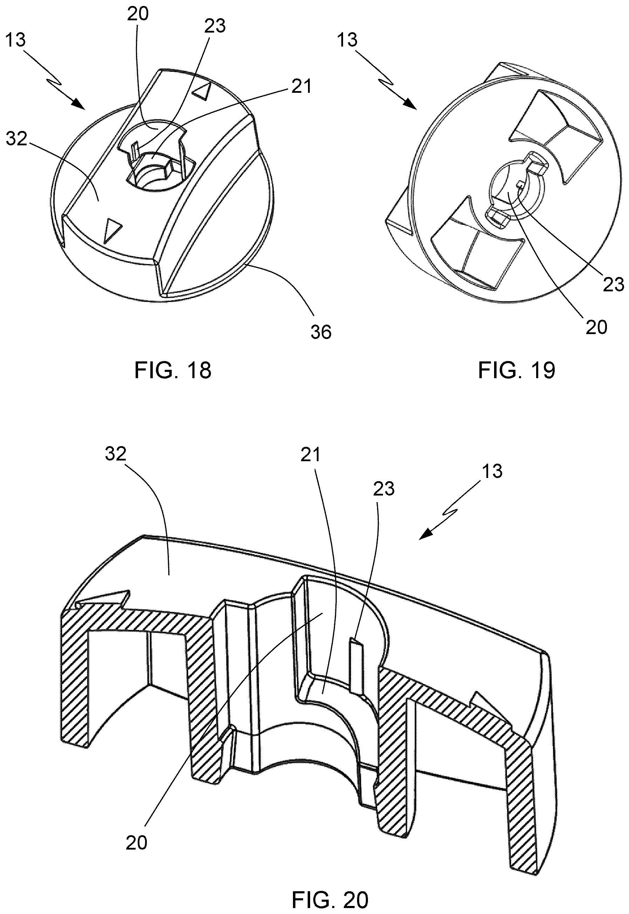

The coupling device 6 is intercalated between the two cable trays 1A, 1B for coupling them through their open ends 5. It is in the form of a straight channel in a longitudinal direction L, with a U-shaped section which corresponds to the section of the cable channels 1A, 1B, with a bottom wall 7, two opposing side walls 8, an open upper face 9, and two opposing open ends 10. The coupling device 6 is formed by five parts: a main body 31 with the U-shaped section described above, two pressing bodies 12, and two actuators 13 which can be manually operated to move each pressing body 12 to a blocking position, as will be seen below. There are two identical assemblies of pressing body 12 and actuator 13, each assembled on one of the side walls 8, to block the coupling on each of these side walls 8. Each of these parts 31, 12, and 13 is made of a polymer material such as, for example, PVC or ABS. Figures 7 to 12 show the coupling device 6 as a whole; Figures 13 and 14 show the main body 31; Figures 15 to 17 show the pressing body 12; and Figures 18 to 20 show the actuator 13.

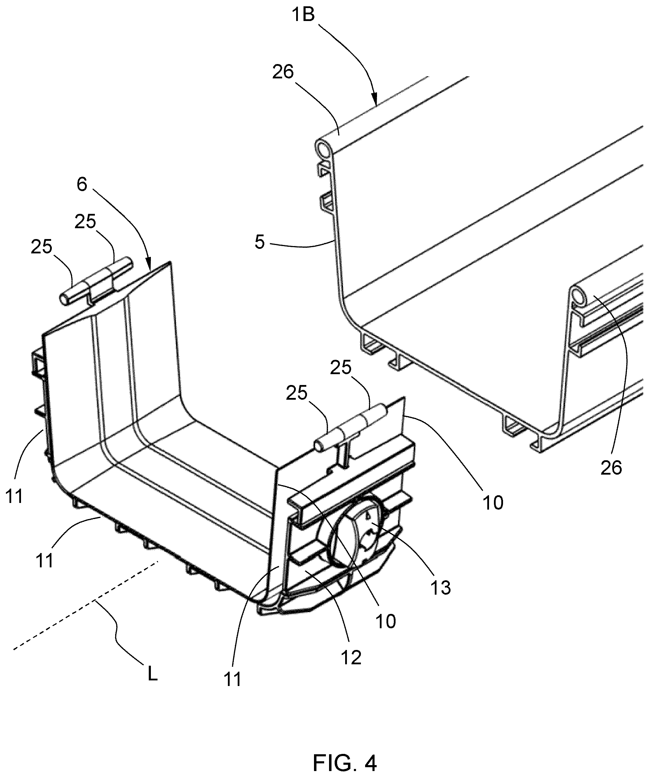

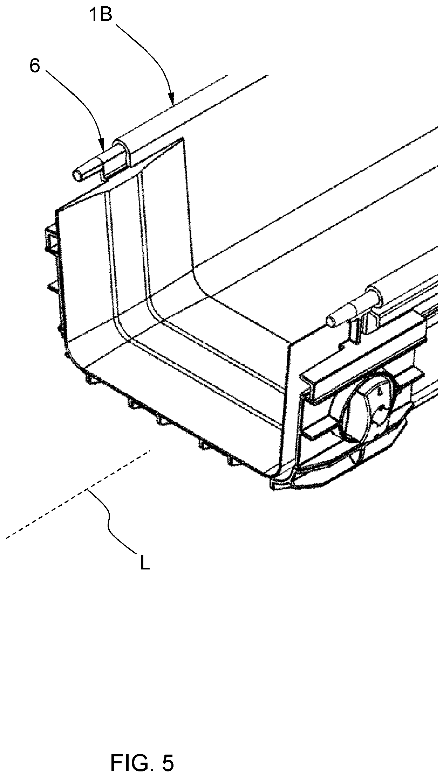

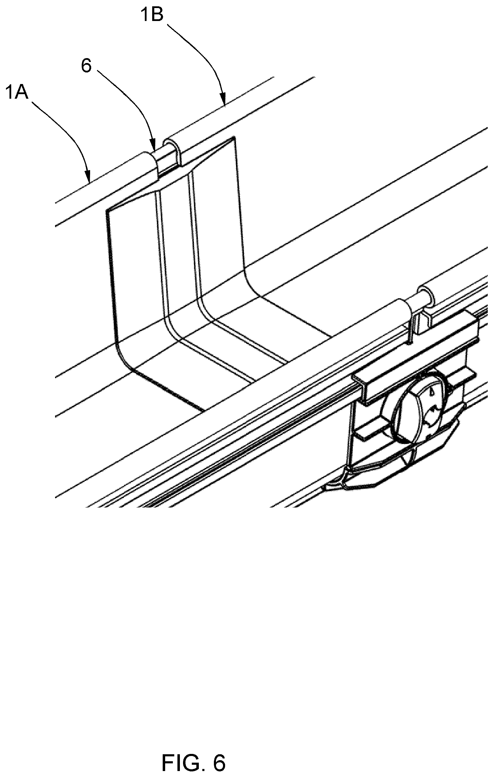

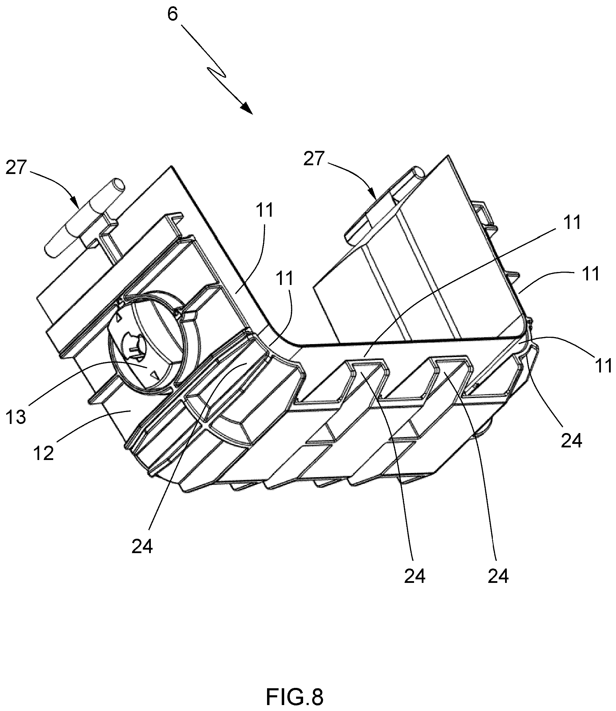

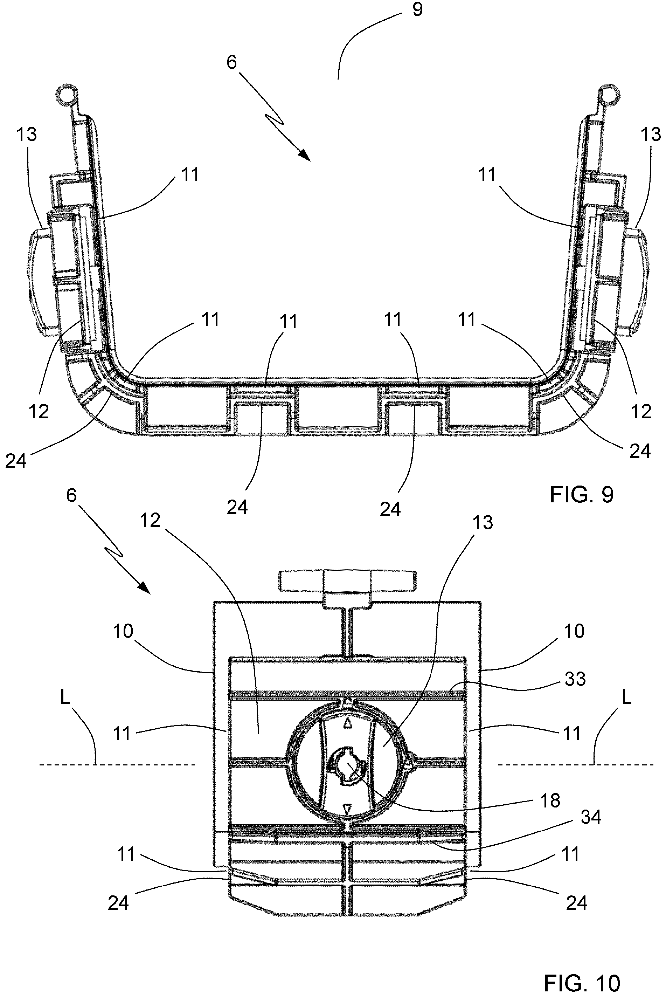

A housing 11 for receiving, in the longitudinal direction L, the open ends 5 of the cable channels 1A, 1B, to thereby couple them to the coupling device 6, is formed along the perimeter of the two open ends 10 of the coupling device 6. Figures 4 to 6 show successive stages for performing coupling, in which a cable channel 1B is first coupled to an open end 10 of the coupling device 6 (Figure 5) and the other cable channel 1A is then coupled to the other open end 10 of the coupling device 6 (Figure 6). In the position shown in Figure 6, the two cable channels 1A, 1B and the coupling device 6 to which they are coupled form a continuous channel in the longitudinal direction L. In the bottom wall 7, the housing 11 is formed by a space delimited between an outer partition 24 and said bottom wall 7 of the coupling device 6. The outer partition 24 is arranged such that it does not reach the end of the bottom wall 7 in the longitudinal direction L. Preferably, the outer partition 24 and the housing 11 delimited by it also extend to the corners between the bottom wall 7 and the side walls 8, as can be seen in Figures 8 and 9. In the side walls 8, the housing 11 is formed by a space delimited laterally by the side wall 8 and by a rigid plate which, as will be described below, constitutes the pressing body 12 and is facing said side wall 8.

The two side walls 8 of the coupling device 6 are identical, and each one has elements formed on their outer face to assemble the pressing body 12 and the actuator 13. As can be seen in Figure 14, each side wall 8 has on its outer face a shaft 18 extending perpendicular to said side wall 8. Two opposing trunnions 22 which cooperate with the actuator 13, as will be seen below, are formed at the free end of the shaft 18. Furthermore, each side wall 8 has on its outer face an upper guide 33 and a lower guide 34 parallel to one another which delimit a space in which the pressing body 12 slidingly fits, such that the pressing body 12 can slide in said space, with respect to said upper guide 33 and lower guide 34, in order to move away from and closer to the side wall 8. Preferably, as can be seen in Figure 10, the side edges of the pressing device 12 are aligned with the side edges of the upper guide 33 and the lower guide 34 and with the side edges of the outer partition 24, such that none of them reaches the end of the bottom wall 7 in the longitudinal direction L.

As shown in Figures 15 to 17, the pressing body 12 is a rigid plate with a generally rectangular shape having, at one end, a first support surface 14 extending in a plane in the longitudinal direction L and in a direction orthogonal thereto and, at an opposing end, a second support surface 15 extending in a plane in said longitudinal direction L and in a direction orthogonal thereto. The support surfaces 14 and 15 are discontinuous and made up of the ridges 16 of protuberances 17 formed on a flat face of the rigid plate constituting the pressing body 12. The reference numbers for all the protuberances 17 are not indicated in Figures 16 and 17 so as not to affect the clarity of the figure. The protuberances 17 are parallel oblong ribs extending in a direction orthogonal to the longitudinal direction L. For example, as shown in the figures, there are four oblong ribs on each of the support surfaces 14, 15, and the oblong rib closest to the center of the rigid plate is interrupted in its central part. The rigid plate forming the pressing body furthermore has an opening 19 for the passage of the shaft 18 with its trunnions 22. The outer face, opposite the face on which the support surfaces 14 and 15 are formed, comprises a circular frame 35 to receive the actuator 13.

The actuator 13 is a rotary knob which is rotatably assembled on the end of the shaft 18 protruding through the opening 19, and is supported on the pressing body 12 in order to push same towards the side wall 8. As can be seen in Figures 18 to 20, the actuator 13 comprises a circular base 36 on which a grip 32 is formed. The circular base 36 fits into the circular frame 35, thereby forming a rotational fitting of the actuator 13 with respect to the pressing body 12. The actuator 13 comprises a cylindrical inner wall 20 coaxial with the shaft 18 and two helical tracks 21 formed by a flange protruding from said cylindrical inner wall 20. The shaft 18 is introduced into the cavity delimited by the cylindrical inner wall 20, such that each of the trunnions 22 is supported on said cylindrical inner wall 20 and on a corresponding helical track 21. When the user rotates the actuator 13 with respect to the shaft 18, the trunnions 22 slide along the helical tracks 21 being supported thereon, whereby the actuator 13 is moved towards the side wall 8 of the coupling device 6, pushing the pressing body 12 which is thus also moved towards the side wall 8. The trunnions 22 travel one quarter of a circumference along the helical tracks 21 with respect to the shaft 18. Two tabs 23 which interfere with each of the trunnions 22 when they slide along the helical tracks 21 are formed in the cylindrical inner wall 20, such that each trunnion 22 overcomes each tab 23 by force when the pressing body 12 reaches the blocking position. The tabs 23 keep the pressing body 12 in the blocking position once the trunnions 22 have overcome them by force.

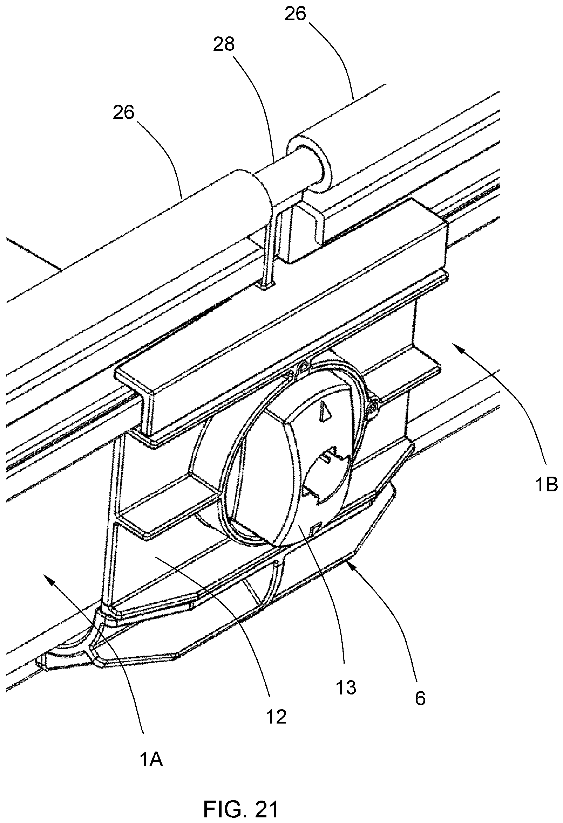

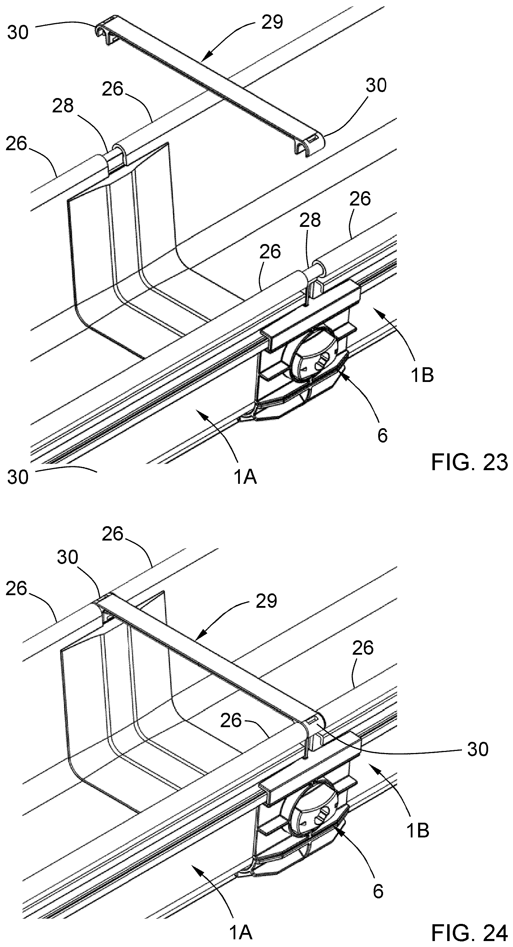

The coupling device 6 comprises, at an upper end of each of its side walls 8, opposite the bottom wall 7, a pin 27 extending in the longitudinal direction L and forming a lug 25 at each of the ends thereof. Each lug 25 extends in the longitudinal direction L and has a section that tapers off towards the end thereof. The two lugs 25 are separated by a central part 28 of the pin 27. When the open end 5 of each of the first and second cable channels 1A, 1B is introduced into the housing 11 for coupling said first and second cable channels 1A, 1B to the coupling device 6, each of the two lugs 25 is introduced and snap-fitted onto the tubular flange 26 of each of the first and second cable channels 1A, 1B, with the central part 28 of the pin 27 being exposed, as can be seen in Figure 21. Optionally, as shown in Figures 23 and 24, a bridge 29 can be placed to close a central segment of the open upper face 9 of the coupling device 6. The bridge 29 has at its ends claws 30 with a shape complementary to the shape of the central part 28 of the pin 27 that is exposed, such that said claws 30 removably snap-fit with said central part 28 of the pins 27. When the bridge 29 is snap-fitted through its claws 30 to the central part 28 of the pins 27, as shown in Figure 24, it does not protrude through the open upper face 9 of the coupling device 6.

The method for coupling the cable channels 1A, 1B to the coupling device 6 and for subsequently blocking this coupling is the one described below. First, a cable channel 1B is coupled to the coupling device 6 (Figure 5), by moving it in the longitudinal direction L to insert the open end 5 into the housing 11 and at the same time snap-fit the lug 25 onto the tubular flange 26. Then, the same operation is performed with the other cable channel 1A (Figure 6), thereby completing the coupling of the two cable channels 1A, 1B to the coupling device 6. Advantageously, the embodiment of the invention described above allows using an alternative method (not shown in the figures) for coupling each of the cable channels 1A, 1B to the coupling device 6. This alternative method consists of first introducing the bottom wall 2 of the cable channel 1A, 1B into the housing 11, keeping said cable channel 1A, 1B slightly inclined with respect to the coupling device 6, and then rotating the cable channel 1A, 1B to thereby introduce the upper end of the side walls 3 into the housing 11 and, at the same time, introduce and snap-fit the lug 25 onto the tubular flange 26.

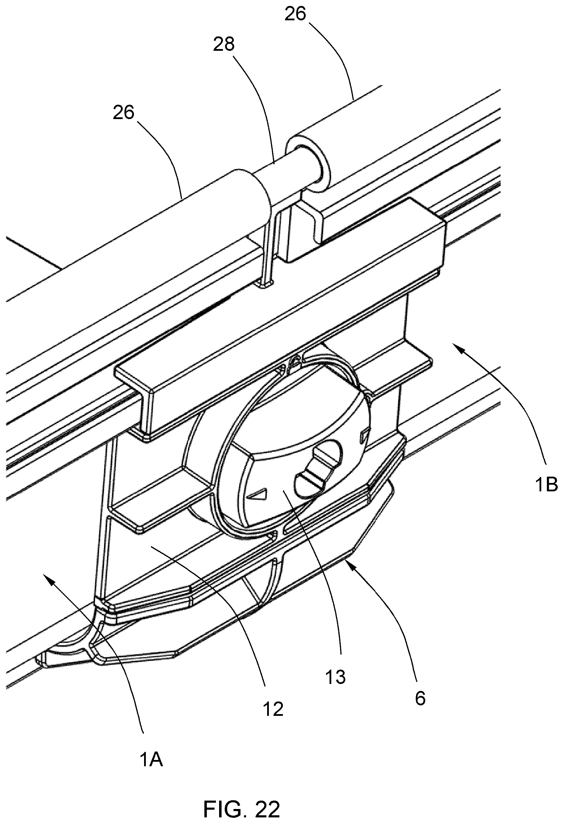

The coupling of the cable channels 1A, 1B to the coupling device 6 is performed with the two actuators 13 (one actuator 13 on each side wall 8) in the non-blocking position shown in Figure 21, in which each pressing body 12 is in a withdrawn position not applying any effective pressure on the side wall 3 of the open end 5 of the cable channel 1A, 1B which is introduced into the housing 11. To block the coupling, the user manually holds each actuator 13 using the grip 32 and rotates the actuator a quarter of a turn until the blocking position shown in Figure 22, where the user must provide at the end of this quarter of a turn sufficient torque to overcome the resistance of the tabs 23 to the passage of the trunnions 22. In this blocking position, the pressing body 12 has been moved towards the side wall 8, pushed by the actuator 13, and is supported with pressure on the side wall 3 of the open end 5 of the cable channel 1A, 1B introduced into the housing 11. The support surfaces 14, 15 are flatly supported with pressure on the side wall 3 of each of the cable channels 1A, 1B, at the open end 5 introduced into each of the housings 11, thereby creating a friction force on said side wall 3 which blocks the movement of said open end 5 in said housing 11. To come out of the blocking position and to thereby allow the uncoupling of the cable channels 1A, 1B and the coupling device 6, the user rotates the actuator 13 a quarter of a turn in the opposite direction, where the user must provide at the start of this quarter of a turn a sufficient torque to overcome the resistance of the tabs 23 to the passage of the trunnions 22.

## Claims

1. An assembly for coupling two cable channels, comprising:
- a first cable channel (1A) and a second cable channel (1B) made of a polymer material, each of them comprising a segment having a U-shaped section, with a bottom wall (2), two opposing side walls (3), an open upper face (4), and at least one open end (5); and
- a coupling device (6) for coupling said first and second cable channels (1A, 1B) to one another, said coupling device (6) being in the form of a straight channel in a longitudinal direction (L), with a U-shaped section, with a bottom wall (7), two opposing side walls (8), an open upper face (9), and two opposing open ends (10); said coupling device (6) comprising, along the perimeter of each of said open ends (10), a housing (11) in which said open end (5) of the first and second cable channels (1A, 1B) is introduced in said longitudinal direction (L), for coupling them to said coupling device (6), such that said first and second cable channels (1A, 1B) and said coupling device (6) form a continuous channel in said longitudinal direction (L); said coupling device (6) further comprising, in each of its two side walls (8), a movable pressing body (12) and an actuator (13) that can be manually operated to move said pressing body (12) to a blocking position, in which said pressing body (12) is supported with pressure on one of the side walls (3) of each of the first and second cable channels (1A, 1B), at the open end (5) introduced into said housing (11), thereby blocking the coupling of said first and second cable channels (1A, 1B) with said coupling device (6);
**characterized in that** said pressing body (12) is a rigid plate made of a polymer material having, at one end, a first support surface (14) extending in a plane in at least said longitudinal direction (L) and, at an opposing end, a second support surface (15) extending in a plane in at least said longitudinal direction (L), such that, in said blocking position, each of said first support surface (14) and second support surface (15) is flatly supported with pressure on the side wall (3) of each of the first and second cable channels (1A, 2A), at the open end (5) introduced into each of said housings (11), thereby creating a friction force on said side wall (3) which blocks the movement of said open end (5) in said housing (11).

2. The assembly for cable channels according to claim 1, **characterized in that**, in the side walls (8) of said coupling device (6), said housing (11) is a space delimited laterally by the side wall (8) of the coupling device (6) and by the rigid plate constituting the pressing body (12), said rigid plate being arranged facing said side wall (8) of the coupling device (6).

3. The assembly for cable channels according to any one of claims 1 or 2, **characterized in that** said first support surface (14) and second support surface (15) are discontinuous and are made up of the ridges (16) of protuberances (17) formed on one face of said pressing body (12).

4. The assembly for cable channels according to claim 3, **characterized in that** said protuberances (17) are oblong ribs.

5. The assembly for cable channels according to claim 4, **characterized in that** said oblong ribs extend in a direction orthogonal to said longitudinal direction (L).

6. The assembly for cable channels according to any one of claims 1 to 5, **characterized in that** said actuator (13) is a rotary knob which is supported on said pressing body (12) and is rotatably assembled about a shaft (18) extending from the side wall (8) of said coupling device (6) and going through an opening (19) of said pressing body (12), such that when said actuator (13) rotates with respect to said shaft (18), said actuator (13) is moved towards the side wall (8) of said coupling device (6) pushing said pressing body (12).

7. The assembly for cable channels according to claim 6, **characterized in that** said actuator (13) comprises a cylindrical inner wall (20) coaxial with said shaft (18) and a helical track (21) formed by a flange protruding from said cylindrical inner wall (20); and said shaft (18) comprises at its end at least one trunnion (22) which is supported on said cylindrical inner wall (20) and on said helical track (21), such that when said actuator (13) rotates with respect to said shaft (18), said trunnion (22) slides along said helical track (21) being supported thereon.

8. The assembly for cable channels according to claim 7, **characterized in that** there is formed in said cylindrical inner wall (20) a tab (23) which interferes with said trunnion (22) when said trunnion (22) slides along said helical track (21), such that said trunnion (22) overcomes said tab (23) by force when said pressing body (12) reaches said blocking position, and such that said tab (23) keeps said pressing body (12) in said blocking position once said trunnion (22) has overcome it by force.

9. The assembly for cable channels according to any one of claims 1 to 8, **characterized in that** said coupling device (6) comprises snap-fitting means, different from said housing (11), which snap-fit with corresponding snap-fitting means of the first and second cable channels (1A, 1B), when said open end (5) of each of the first and second cable channels (1A, 1B) is introduced into said housing (11) for coupling said first and second cable channels (1A, 1B) to said coupling device (6).

10. The assembly for cable channels according to claim 9, **characterized in that** said snap-fitting means in said coupling device (6) are arranged at an upper end of its side walls (8), opposite its bottom wall (7), and said snap-fitting means in said first and second cable channels (1A, 1B) are arranged at an upper end of their side walls (4), opposite their bottom wall (2); and **in that**, at least in the bottom wall (7) of said coupling device (6), said housing (11) is formed by a space delimited between an outer partition (24) and said bottom wall (7) of the coupling device (6), said outer partition (24) being arranged such that it does not reach the end of said bottom wall (7) of the coupling device (6) in the longitudinal direction (L).

11. The assembly for cable channels according to any one of claims 9 or 10, **characterized in that** said snap-fitting means in the coupling device (6) are two opposing lugs (25), formed in each of the side walls (8) of the coupling device (6), extending in the longitudinal direction (L) and having a section that tapers off towards the end thereof; and said corresponding snap-fitting means in the first and second cable channels (1A, 1B) are a tubular flange (26) at an upper end of each of the side walls (3) of said first and second cable channels (1A, 1B), such that each of said lugs (25) is introduced and snap-fitted onto said tubular flange (26) of each of said first and second cable channels (1A, 1B).

12. The assembly for cable channels according to claim 11, **characterized in that** said coupling device (6) comprises, at an upper end of each of its side walls (8), a pin (27) extending in the longitudinal direction (L) and forming at each of the ends thereof one of said lugs (25).

13. The assembly for cable channels according to claim 12, **characterized in that** said pin (27) comprises a central part (28) separating said lugs (25), said central part (28) being exposed when said first and second cable channels (1A, 1B) are coupled to said coupling device (6), with said lugs (25) being introduced and snap-fitted onto said tubular flange (26) of each of said first and second cable channels (1A, 1B); and said assembly comprises a bridge (29) having at its ends claws (30) with a shape complementary to the shape of said central part (28) of the pin (27), such that said claws (30) removably snap-fit with said central part (28) of the pins (27), and said bridge (29) closes a central segment of the open upper face (9) of said coupling device (6).

14. The assembly for cable channels according to claim 13, **characterized in that** said bridge (29) is formed such that, when it is snap-fitted through said claws (30) to said central part (28) of the pins (27), closing a central segment of the open upper face (9) of the coupling device (6), said bridge (29) does not protrude through said open upper face (9) of the coupling device (6).

15. A coupling device (6) for the assembly according to any one of claims 1 to 14, said coupling device (6) being in the form of a straight channel in a longitudinal direction (L), with a U-shaped section, with a bottom wall (7), two opposing side walls (8), an open upper face (9), and two opposing open ends (10); and said coupling device (6) comprising, along the perimeter of each of said open ends (10), a housing (11) for introducing in the longitudinal direction (L) the open end (5) of the first and second cable channels (1A, 1B) of said assembly, for coupling them to said coupling device (6), such that said first and second cable channels (1A, 1B) and said coupling device (6) form a continuous channel in said longitudinal direction (L); said coupling device (6) further comprising, in each of its two side walls (8), a movable pressing body (12) and an actuator (13) that can be manually operated to move said pressing body (12) to a blocking position, so that said pressing body (12) is supported with pressure on one of the side walls (3) of each of the first and second cable channels (1A, 1B), at the open end (5) introduced into said housing (11), thereby blocking the coupling of said first and second cable channels (1A, 1B) with said coupling device (6);
**characterized in that** said pressing body (12) is a rigid plate made of a polymer material having, at one end, a first support surface (14) extending in a plane in at least said longitudinal direction (L) and, at an opposing end, a second support surface (15) extending in a plane in at least said longitudinal direction (L), so that, in said blocking position, each of said first support surface (14) and second support surface (15) is flatly supported with pressure on the side wall (3) of each of the first and second cable channels (1A, 2A), at the open end (5) introduced into each of said housings (11), to create a friction force on said side wall (3) which blocks the movement of said open end (5) in said housing (11).
